# EUROPÄISCHE PATENTSCHRIFT

(11) **EP 2 117 358 B1**
(45) Veröffentlichungstag und Bekanntmachung des Hinweises auf die Patenterteilung: **30.03.2011**
(21) Anmeldenummer: 08700300.0
(22) Anmeldetag: 04.02.2008
(51) Int. Cl.: A23L 2/02

(54) **ROTE RÜBENSAFT**
RED BEET JUICE
JUS DE BETTERAVES ROUGES

(30) Priorität: 13.02.2007 AT 8607 U
(43) Veröffentlichungstag der Anmeldung: 18.11.2009
(73) Patentinhaber: Jungegger, Roman, 1230 Wien (AT)
(72) Erfinder: Jungegger, Roman, 1230 Wien (AT)
(74) Vertreter: Sonn & Partner Patentanwälte
(86) Internationale Anmeldenummer: PCT/AT2008/000034
(87) Internationale Veröffentlichungsnummer: WO 2008/098273

(56) Entgegenhaltungen:
- EP-A- 0 515 721
- WO-A-2005/062713
- DE-B3- 10 314 608
- US-A- 5 145 678
- SCHUMANN: "Ergebnisse und Tendenzen der Erzeugnisentwicklung in der obst- und gemüseverarbeitenden Industrie" DIE LEBENSMITTEL-INDUSTRIE, Bd. 23, Nr. 8, 1976, Seiten 357-359, XP008089859 DE

## Beschreibung

Die Erfindung betrifft ein Mischgetränk mit Saft aus Roten Rüben und Zitronensaft.

Rübensaft ist im Allgemeinen als Mittel zur Reduzierung von Cholesterin bekannt. Beispielsweise ist in der US 5,145,678 A ein Verfahren zur Minderung von Cholesterin vorgeschlagen, nach dem eine Mischung aus Zuckerrübensaft, Zitronensaft und Honig zur oralen Verabreichung über einen definierten Zeitraum hinweg bereitgestellt wird.

Es ist auch bekannt, dass der Saft aus Roten Rüben - im Gegensatz zum Zuckerrübensaft - eine ganz besondere gesundheitsfördernde Wirkung aufweist. Rote Rüben enthalten eine Vielzahl an. Vitaminen und Mineralstoffen. Die Wirkungen von Roten Rüben sind vielfältig, wobei ihnen insbesondere fiebersenkende, antibakterielle, immunsystemstärkende, muntermachende, kraftspendende, appetitanregende, herzstärkende, reinigende, leberschützende, fettabbauende und andere Wirkungen nachgesagt wird. Vor allem bei Tumorerkrankungen oder zur Vorbeugung gegen Tumorerkrankungen werden Rote Rüben sehr geschätzt. Weiters sind Rote Rüben gut gegen Hautunreinheiten.

Der pure Rotenrübensaft ist allerdings für viele Menschen geschmacklich nicht sehr bekömmlich. Um den relativ intensiven, eigentümlichen Geschmack eines Rotenrübensafts zu verbessern, ist es bekannt, dem Saft aus Roten Rüben geringe Mengen Zitronensaft, gängigerweise einen Spritzer, beizugeben. Ein solches Getränk ist beispielsweise durch die WO 2005/062713 A2 oder durch die DE 103 14 608 B3 vorgeschlagen. Diese Menge ist jedoch nicht ausreichend, um den eigentümlichen Geschmack des Rotenrübensafts zu verbessern oder gar zu übertünchen. Auch ist es bei diesen Mengen nicht möglich, dass die positiven Aspekte, die der Zitronensaft mit sich bringt, in nennenswerter Weise für den Konsumenten eintreten.

Aufgabe der Erfindung ist es demnach Rotenrübensaft ohne viel Arbeits- und Kostenaufwand bekömmlicher zu machen und für viele Menschen ein gesundes, geschmackvolles und in weiterer Folge beliebtes Getränk bereitzustellen sowie die positiven Wirkungen des Rotenrübensafts zu verbessern.

Demgemäß betrifft die vorliegende Erfindung ein Mischgetränk, das mindestens 30 % Saft aus Roten Rüben und mindestens 30 % Zitronensaft enthält. Die verhältnismäßig großen Mengen an Zitronensaft können den eigentümlichen Geschmack der Roten Rüben somit abschwächen, dass der Rotenrübensaft für viele Menschen geschmackvoller und auch erfrischender ist. Der Vorteil des mengenmäßig hohen Anteils an Zitronensaft ist weiters, dass mit den gesundheitlich fördernden Wirkstoffen der Roten Rüben auch gleichzeitig große Mengen an Vitamin C und vorteilhaften Inhaltsstoffen, insbesondere Vitaminen, aus den Zitrusfrüchten eingenommen werden können.

Es ist bevorzugt, dass im Getränk mindestens 40 % Saft aus Roten Rüben und mindestens 40 % Zitronensaft enthalten ist. Für ein besonders natürliches und kraftvolles Getränk kann das Getränk auch 50 % Saft aus Roten Rüben und 50 % Zitronensaft enthalten. In diesem Fall liegt ein besonders natürliches Trinkprodukt vor, dass sich insbesondere dadurch auszeichnet, dass es frei von Zusatzstoffen ist.

An sich kann für das Getränk der Saft verschiedenster Zitrusfrüchte verwendet werden. Je nach Bedarf können die Zitrusfrüchte ausgewählt sein aus der Gruppe Echte Limette *(Citrus aurantiifolia*), Bergamotte (*Citrus bergamia*), Kaffernlimette *(Citrus hystrix),* Rauhschalige Zitrone (*Citrus jambhiri*), Gewöhnliche Limette (*Citrus latifolia*) oder auch Süße Limette (*Citrus limetta*), Zitrone (*Citrus limon*), darunter beispielsweise Rangpur-Limette (*Citrus limonia*), Zitronatzitrone (*Citrus medica*), Yuzu (*Citrus junos*) oder auch die Hyüganatsu (*Citrus tamurana*) sowie Mischungen davon.

Um das Getränk in seiner natürlichen Form bereitzustellen, ist es bevorzugt, dass der Saft aus Roten Rüben und/oder Zitronensaft frisch gepresst ist. Alternativ dazu kann der Saft aus Roten Rüben und/oder der Zitronensaft aus einem Konzentrat hergestellt sein, wobei die Menge an zuzugebenden Wasser je nach Geschmacksintensität des Getränks variiert werden kann. Selbstverständlich kann einem frisch gepressten Getränk zwecks Geschmackverstärkung auch ein Konzentrat der Säfte beigemengt sein.

Manche Menschen empfinden bei Vorhandensein von Fruchtfleisch eine besonders natürliche Frische. Es kann daher von Vorteil sein, wenn im Getränk Fruchtfleisch von Roten Rüben und/oder von Zitronensaft enthalten ist. Selbstverständlich ist es auch möglich, Fruchtfleisch in "künstlicher" Form, z.B. aus Pressrückständen und mit Zusatzstoffen hergestelltes, nachgebildetes Fruchtfleisch, vorzusehen, wobei natürliches Fruchtfleisch - auch von anderem Obst oder Gemüse - zu bevorzugen ist.

Um das Fruchtfleisch für den Verbraucher "wahrnehmbar" zu machen, kann der Anteil an Fruchtfleisch beispielsweise bis zu etwa 10 % des Getränks betragen.

Aufgrund der relativ hohen, natürlichen Säure der Säfte im Getränk vertragen viele Menschen ein derartiges Getränk nur schlecht. Aus diesem Grund kann es gewünscht sein, dass das Getränk zumindest ein Süßungsmittel enthält. Hierbei kann der Anteil an Süßungsmittel je nach Wunsch oder je nach Süßungskraft des jeweiligen Mittels variieren, wobei er beispielsweise bis zu 20 %, vorzugsweise bis zu 10 % oder 5%, des Getränks betragen kann.

Vorteilhafterweise weist das Getränk zumindest ein natürliches Süßungsmittel auf. Bevorzugterweise wird kein künstlicher Süßstoff verwendet.

Hierfür kommen vielerlei Arten an Süßungsmitteln bzw. Süßstoffen in Frage, wobei der Zusatz von natürlichen Süßungsmitteln und die Freiheit von künstlichen Süßstoffen, wie erwähnt, zu bevorzugen ist. Diese können aus der Gruppe umfassend Honig, Zucker, Sirup aus Rinden, insbesondere Ahorn, Obst, Getreide, insbesondere Amaranth, sowie Mischungen davon ausgewählt sein. Unter Zucker als natürliches Süßungsmittel können verschiedene Zuckerarten verwendet werden, wie beispielsweise Rohrzucker, Rübenzucker, Traubenzucker, Fruchtzucker, Invertzucker und dgl..

Falls der Zusatz von künstlichen Süßungsmitteln (Süßstoffe) trotzdem erwünscht ist, können diese vorzugsweise aus der Gruppe umfassend Aspartam, Acesulfam, Cyclamat, Saccharin, Sucralose, Thaumatin, Neohesperidin, Sorbit sowie Mischungen davon ausgewählt sein.

Im Allgemeinen sind dem Getränk vorteilhafterweise solche Zusatzstoffe beigemengt, die von Gesundheitsbehörden anerkannt und zur unbedenklichen Konsumation freigegeben sind. Dies gilt selbstverständlich auch für die anderen hier angeführten künstlichen und auch natürlichen Stoffe.

Der Saft aus Roten Rüben und der Zitronensaft haben eine sehr erfrischende Wirkung. Nichtsdestoweniger kann das erfindungsgemäße Getränk zusätzlich Kohlensäure enthalten, um die erfrischende und durstlöschende Wirkung zu erhöhen. Beispielsweise kann das Getränk durch Beimengung von kohlensäurehältigem, vorzugsweise natürlichem, Wasser mit Kohlensäure versetzt sein. Die Kohlensäure kann auch durch Einblasen von CO₂ oder durch Zugabe von CO₂-Tabletten zugegeben werden. In diesem Fall kann dem Getränk kohlensäurearmes oder kohlensäurefreies Wasser zwecks Verdünnung beigemengt sein (also zusätzlich zum erfindungsgemäßen Saftänteil). Bei der Zugabe von Kohlensäure ist jedenfalls auf die Sättigung des anteiligen Wassers im Getränk bzw. in den Säften zu achten. Der Anteil an zugegebener Kohlensäure im Getränk kann bis zu 5 %, vorzugsweise 0,1 % bis 3 %, betragen.

Es kann der Fall sein, dass der Geschmack des Getränks bzw. der Säfte abgeschwächt, intensiviert oder gar mehr oder weniger verändert werden möchte. Diesbezüglichist es günstig, wenn im Getränk zumindest ein Aroma ausgewählt aus der Gruppe umfassend natürliche Aromen, naturidentische Aromen, künstliche Aromen sowie Mischungen davon enthalten ist. Selbstverständlich können diese Aromen in beliebiger Form beigemengt sein, z.B. in Form von Aromaextrakten. Der Anteil an Aromen im Getränk kann z.B. 5 % oder je nach Wunsch auch mehr betragen.

Durch den hohen Gehalt an Zitronensaft weist das erfindungsgemäße Rotenrübensaft-Getränk von vornherein hohe antibakterielle Eigenschaften und damit auch eine erhöhte Haltbarkeit auf. Um den Befall des Getränks durch Mikroorganismen, Insekten oder anderen Lebensformen, wodurch es zu qualitätsmindernden Veränderungen des Getränks oder gar Gesundheitsrisiken kommen kann, noch weiter zu verhindern, kann es gewünscht sein, dass im Getränk zumindest ein Konservierungsmittel enthalten ist. Um eine Beeinträchtigung des natürlichen Geschmacks des Getränks zu vermeiden, kann es bevorzugt sein, dass das zumindest eine Konservierungsmittel geschmacksneutral ist. Im Prinzip sind natürliche Konservierungsmittel zu bevorzugen. Es können aber auch Konservierungsmittel aus der Gruppe umfassend Sorbinsäure (E 200), Natriumsorbat (E 201), Kaliumsorbat (E 202), Calciumsorbat (E 203), Benzoesäure (E 210), Natriumbenzoat (E 211), Kaliumbenzoat (E 212), Calciumbenzoat (E 213), PHB-Ester (E 214), PHB-Ethylester Natriumsalz (E 215), PHB-Propylester (E 216), PHB- Propylester Natriumsalz (E 217), PHB-Methylester (E 218), PHB-Methylester Natriumsalz (E 219), Schwefeldioxid (E 220), Natriumsulfit (E 221), Natriumbisulfit (E 222), Natriumdisulfit (E 223), Kaliumsulfit (E 224), Calciumsulfit (E 226), Calciumhydrogensulfit (E 227), Calciumhydrogensulfit (E 228), Biphenyl (E 230), orthophenylphenol (E 231), Natriumorthophenylphenol (E 232), Thiabendazol (E 233), Nisin (E 234), Natamycin (E 235), Hexamethylentetramin (E 239), Dimethyldicarbonat (E 242), Kaliumnitrit (E 249), Natriumnitrit (E 250), Natriumnitrat (E 251), Kaliumnitrat (E 252), Essigsäure (E 260), Kaliumacetat (E 261), Natriumacetat (E 262a), Natriumhydrogenacetat (E 262b), Calciumacetat (E 263), Milchsäure (E 270), Propionsäure (E 280), Natriumpropionat (E 281), Calciumpropionat (E 282), Kaliumpropionat (E 283), Borsäure (E 284), Borax (E 285) sowie Mischungen davon ausgewählt sein. Die Klammerausdrücke (E-Nummern) beziehen sich auf klassifizierte, europaweit anerkannte Zusatzstoffe.

Rote Rüben enthalten einen natürlichen Farbstoff, der dem Getränk aufgrund seiner Intensität und Dominanz eine tief rote Farbe verleiht. Nichtsdestoweniger kann diese Farbe weiter intensiviert, abgeschwächt oder auch verändert werden, indem dem Getränk weiters zumindest ein Farbstoff zugesetzt ist. Bevorzugterweise kann ein natürlicher Farbstoff gewählt werden, wie z.B. der orangefarbene Farbstoff von Karotten, der grüne Farbstoff von Spinat oder andere. Ein solcher Farbstoff kann beispielsweise in Form eines Saftes oder auch in Form eines Extrakts beigemengt sein. Alternativ oder auch zusätzlich können auch andere Farbstoffe, insbesondere Lebensmittelfarbe, verwendet werden. Hierbei kann der zumindest eine, vorzugsweise geschmacksneutrale, Farbstoff ausgewählt sein aus der Gruppe Allurarot AC (E 129), Amaranth (E 123)., Anthocyane (E 163), Azorubin (E 122), Betanin (E 162), Braun FK (E 154), Braun HT (E 155), Brillantblau FCF (E 133), Brillantschwarz BN (E 151), Calciumcarbonat (E 170), Canthaxanthin (E 161g), Carotin (E 160a), Annatto (E. 160b), Capsanthin (E 160c), Lycopin (E 160d), Beta-apo-8'-Carotinal (C30) (E 160e), Beta-apo-8'-Carotinsäure (C30) Ethylester (E 160f), Chinolingelb (E 104), Chlorophyll (E 140), Cochenillerot A (E 124), Curcumin (E 100), Eisenoxid (E 172), Erythrosin (E 127), Gelborange S (E 110), Gold (E 175), Grün S (E 142), Indigotin (E 132), Koschenille (E 120), Kupferhaltige Komplexe der Chlorophylle und Chlorophylline (E 141), Lactoflavin (E 101), Litholrubin BK (E 180), Lutein (E 161b), Patentblau V (E 131), Pflanzenkohle (E 153), Riboflavin (Vitamin B2) (E 101), Riboflavin-5-phosphat (E 101a), Rot 2G (E 128), Silber (E 174), Tartrazin (E 102), Titandioxid (E 171), Zuckerkulör (E 150a), Sulfitlaugen-Zuckerkulör (E 150b), Ammoniak-Zuckerkulör (E 150c), Ammonsulfit-Zuckerkulör (E 150d), Zeaxanthin (E161h) sowie Mischungen daraus.

Insbesondere im Fall, dass das Getränk kohlensäurenhältig ist, kann es erwünscht sein, dass weiters zumindest ein pH-regulierendes Mittel (Säureregulatoren) enthalten ist. Mit einem solchen Mittel kann der Sättigungsgrad des anteiligen Wassers hinsichtlich der Säure im Getränk reguliert werden, wobei der Anteil an pH-regulierendem Mittel je nach Bedarf variieren kann.

Je nach Wunsch kann das Getränk auch eine dickere Konsistenz aufweisen. Beispielsweise kann das Getränk in Form einer Molke zur Verfügung gestellt sein, die bereits für sich alleine schon eine höhere Viskosität aufweist. Insbesondere in diesem Fall kann der Saftanteil aus Roten Rüben und/oder Zitronensaft im Getränk etwa 30 % betragen.

Um die Viskosität der Säfte im Getränk zu erhöhen, kann es auch vorteilhaft sein, wenn das Getränk zumindest ein Verdickungsmittel enthält, das ausgewählt ist aus der Gruppe Alginsäure (E 400), Agar (E 406), Carrageen (E 407), Johannisbrotkernmehl (E 410), Guarkernmehl (E 412), Traganth (E 413), Gummi arabicum (E 414), Xanthan (E 415), Karaya (E 416), Tarakernmehl (E 417), Gellan (E 418), Pektin (E 440), Zellulose (E 460), Zelluloseether, insbesondere Carboxymethylcellulose (E 466), Hydroxypropylcellulose (E 463), Hydroxypropylmethylcellulose (E 464), Methylcellulose (E 461), Methylethylcellulose (E 465), modifizierte Stärke (E 1404, E 1410, E 1412, E 1413, E 1414, E 1420, E 1422, E 1440, E 1442, E 1450, E 1451) sowie Mischungen daraus. Weitere Verdickungsmittel bzw. Bindemittel, die gängigerweise im Haushalt verwendet und u.a. zubereitet werden, sind beispielsweise Agar, Eigelb, Gelatine, Mehlschwitze, Mehlbutter, Pektin, Sago, Stärke sowie Mischungen davon.

Es versteht sich von selbst, dass dem erfindungsgemäßen Getränk je nach Belieben auch Wasser zur Verdünnung hinzugegeben werden kann.

### Beispiele:

### Beispiel 1:

50 ccm frisch gepresster Zitronensaft von unbehandelten Zitronen werden mit 50 ccm frisch gepresstem Rotenrübensaft vermengt und mit 1 ½ Teelöffel Honig, Sommerblütenhonig der Marke Biophar (wabenecht), gesüßt. Danach wird das Getränk mit ¼ l kohlensäurenhältigem, natürlichem Mineralwasser der Marke Gasteiner Sparkling aufgegossen.

### Beispiel 2:

40 ccm frisch gepresster Zitronensaft von unbehandelten Zitronen werden mit 50 ccm Rotenrübensaft, einem Fertigprodukt der Marke Spar Natur pur Bio-Rote-Rüben-Saft, vermengt. Dem Mischgetränk werden 2 Teelöffel Honig, Sommerblütenhonig der Marke Biophar, (wabenecht), hinzugegeben. Das Getränk wird mit ¼ l natürlichem kohlensäurenhältigem Mineralwasser der Marke Gasteiner Sparkling aufgespritzt.

### Beispiel 3 :

50 ccm frisch gepresster Zitronensaft von unbehandelten Zitronen werden mit 50 ccm frisch gepresstem Rotenrübensaft vermengt und mit 2 Teelöffel Honig, Sommerblütenhonig der Marke Biophar, (wabenecht), gesüßt.

## Patentansprüche

1. Mischgetränk mit Saft aus Roten Rüben und Zitronensaft, **dadurch gekennzeichnet, dass** mindestens 30 % Saft aus Roten Rüben und mindestens 30 % Zitronensaft enthalten ist.

2. Getränk nach Anspruch 1, **dadurch gekennzeichnet, dass** mindestens 40 % Saft aus Roten Rüben und mindestens 40 % Zitronensaft enthalten ist.

3. Getränk nach Anspruch 1 oder 2, **dadurch gekennzeichnet, dass** mindestens 50 % Saft aus Roten Rüben und mindestens 50 % Zitronensaft enthalten ist.

4. Getränk nach einem der Ansprüche 1 bis 3, **dadurch gekennzeichnet, dass** die Zitrusfrüchte ausgewählt sind aus der Gruppe umfassend Echte Limette (*Citrus aurantiifolia*), Bergamotte (Ci*trus bergamia*), Kaffernlimette *(Citrus hystrix),* Rauhschalige Zitrone (*Citrus jambhiri*), Gewöhnliche Limette (*Citrus latifolia*) oder auch Süße Limette (*Citrus limetta*), Zitrone *(Citrus limon*), darunter beispielsweise Rangpur-Limette (*Citrus limo*nia), Zitronatzitrone (*Citrus medica*), Yuzu (*Citrus junos*) oder auch die Hyüganatsu (*Citrus tamurana*) sowie Mischungen davon.

5. Getränk nach einem der Ansprüche 1 bis 4, **dadurch gekennzeichnet, dass** der Saft aus Roten Rüben und/oder Zitronensaft frisch gepresst ist.

6. Getränk nach einem der Ansprüche 1 bis 5, **dadurch gekennzeichnet, dass** Fruchtfleisch von Roten Rüben und/oder Zitronensaft enthalten ist, vorzugsweise dass der Anteil an Fruchtfleisch bis zu etwa 10 % des Getränks beträgt.

7. Getränk nach einem der Ansprüche 1 bis 6, **dadurch gekennzeichnet, dass** zumindest ein Süßungsmittel enthalten ist, wobei der Anteil an Süßungsmitteln vorzugsweise bis zu 20 %, insbesondere bis zu 10 %, des Getränks beträgt.

8. Getränk nach Anspruch 7, **dadurch gekennzeichnet, dass** als Süßungsmittel zumindest ein natürliches Süßungsmittel enthalten ist, vorzugsweise ein Süßungsmittel ausgewählt aus der Gruppe umfassend Honig, Zucker, Sirup aus Rinden, insbesondere Ahorn, Obst, Getreide, insbesondere Amaranth, sowie Mischungen davon.

9. Getränk nach einem der Ansprüche 1 bis 8, **dadurch gekennzeichnet, dass** Kohlensäure enthalten ist.

10. Getränk nach Anspruch 9, **dadurch gekennzeichnet, dass** der Anteil an Kohlensäure bis zu 5 %, vorzugsweise 0, 1 % bis 3 %, beträgt.

11. Getränk nach einem der Ansprüche 1 bis 10, **dadurch gekennzeichnet, dass** zumindest ein Aroma ausgewählt aus der Gruppe umfassend natürliche Aromen, naturidentische Aromen sowie Mischungen davon enthalten ist.

12. Getränk nach Anspruch 11, **dadurch gekennzeichnet, dass** der Anteil an Aromen 5 % des Getränks nicht übersteigt.

13. Getränk nach einem der Ansprüche 1 bis 12, **dadurch gekennzeichnet, dass** zumindest ein Konservierungsmittel ausgewählt aus der Gruppe umfassend Sorbinsäure, Natriumsorbat, Kaliumsorbat, Calciumsorbat, Benzoesäure, Natriumbenzoat, Kaliumbenzoat, Calciumbenzoat, PHB-Ester, PHB-Ethylester Natriumsalz, PHB-Propylester, PHB- Propylester Natriumsalz, PHB-Methylester, PHB-Methylester Natriumsalz, Schwefeldioxid, Natriumsulfit, Natriumbisulfit, Natriumdisulfit, Kaliumsulfit, Calciumsulfit, Calciumhydrogensulfit, Calciumhydrogensulfit, Biphenyl, Orthophenylphenol, Natriumorthophenylphenol, Thiabendazol, Nisin, Natamycin, Hexamethylentetramin, Dimethyldicarbonat, Kaliumnitrit, Natriumnitrit, Natriumnitrat, Kaliumnitrat, Essigsäure, Kaliumacetat, Natriumacetat, Natriumhydrogenacetat, Calciumacetat, Milchsäure, Propionsäure, Natriumpropionat, Calciumpropionat, Kaliumpropionat, Borsäure, Borax sowie Mischungen davon enthalten ist.

14. Getränk nach einem der Ansprüche 1 bis 13, **dadurch gekennzeichnet, dass** zumindest ein pH-regulierendes Mittel enthalten ist.

15. Getränk nach einem der Ansprüche 1 bis 14, **dadurch gekennzeichnet, dass** zumindest ein Verdickungsmittel ausgewählt aus der Gruppe Alginsäure, Agar, Carrageen, Johannisbrotkernmehl, Guarkernmehl, Traganth, Gummi arabicum, Xanthan, Karaya, Tarakernmehl, Gellan, Pektin, Zellulose, Zelluloseether, insbesondere Carboxymethylcellulose, Hydroxypropylcellulose, Hydroxypropylmethylcellulose, Methylcellulose, Methylethylcellulose, modifizierte Stärke sowie Mischungen davon und/oder ausgewählt aus der Gruppe Agar, Eigelb, Gelatine, Mehlschwitze, Mehlbutter, Pektin, Sago, Stärke sowie Mischungen davon, enthalten sind.

## Claims

1. A mixed drink containing of juice from beetroots and lemon juice, **characterized in that** it comprises at least 30 % of beetroot juice and at least 30 % of lemon juice.

2. The beverage according to claim 1, **characterized in that** it comprises at least 40 % of beetroot juice and at least 40 % of lemon juice.

3. The beverage according to claim 1 or 2, **characterized in that** it comprises at least 50 % of beetroot juice and at least 50 % of lemon juice.

4. The beverage according to any one of claims 1 to 3, **characterized in that** the citrus fruits are selected from the group comprising key lime (*Citrus aurantiifolia*), bergamot *(Citrus bergamia*), kaffir lime *(Citrus hystrix),* rough lemon *(Citrus jambhiri*), Persian lime (*Citrus latifolia*) or also sweet lemon (*Citrus limetta*), lemon (*Citrus limon*), including amongst others for example Rangpur (*Citrus limonia*), citron (*Citrus medica*), Yuzu (*Citrus junos*) or also Hyûganatsu (*Citrus tamurana*), as well as mixtures thereof.

5. The beverage according to any one of claims 1 to 4, **characterized in that** the beetroot juice and/or the lemon juice is freshly squeezed.

6. The beverage according to any one of claims 1 to 5, **characterized in that** it comprises the pulp of beetroots and/or lemon juice, preferably the amount of pulp is up to about 10 % of the beverage.

7. The beverage according to any one of claims 1 to 6, **characterized in that** it comprises at least one sweetener, wherein the amount of sweetener is preferably up to 20 %, particularly up to 10 % of the beverage.

8. The beverage according to claim 7, **characterized in that** it comprises as a sweetener at least one natural sweetener, preferably a sweetener selected from the group comprising honey, sugar, syrup of rinds, particularly maple, fruit, grain, particularly amaranth, as well as mixtures thereof.

9. The beverage according to any one of claims 1 to 8, **characterized in that** it comprises carbonic acid.

10. The beverage according to claim 9, **characterized in that** the amount of carbonic acid is up to 5 %, preferably 0,1 % to 3 %.

11. The beverage according to any one of claims 1 to 10, **characterized in that** it comprises at least one aroma selected from the group comprising natural aromas, nature-identical aromas, as well as mixtures thereof.

12. The beverage according to claim 11, **characterized in that** the amount of aromas does not exceed 5 % of the beverage.

13. The beverage according to any one of claims 1 to 12, **characterized in that** it comprises at least one preservative selected from the group comprising sorbic acid, sodium sorbate, potassium sorbate, calcium sorbate, benzoic acid, sodium benzoate, potassium benzoate, calcium benzoate, PHB ester, PHB ethyl ester, sodium salt, PHB propyl ester, PHB propyl ester sodium salt, PHB methyl ester, PHB methyl ester sodium salt, sulfur dioxide, sodium sulfite, sodium bisulfite, sodium metabisulfite, potassium sulfite, calcium sulfite, calcium hydrogen sulfite, biphenyl, orthophenyl phenol, sodium orthophenyl phenol, thiabendazole, nisin, natamycin, hexamethylenetetramine, dimethyl dicarbonate, potassium nitrite, sodium nitrite, sodium nitrate, potassium nitrate, acetic acid, potassium acetate, sodium acetate, sodium hydrogen acetate, calcium acetate, lactic acid, propionic acid, sodium propionate, calcium propionate, potassium propionate, boric acid, borax as well as mixtures thereof.

14. The beverage according to any one of claims 1 to 13, **characterized in that** it comprises at least one pH-regulating agent.

15. The beverage according to any one of claims 1 to 14, **characterized in that** it comprises at least one thickening agent selected from the group alginic acid, agar, carrageen, carob bean gum, guar gum, gum tragacanth, gum arabic, xanthan gum, gum karaya, tara gum, gellan gum, pectin, cellulose, cellulose ether, particularly carboxymethyl cellulose, hydroxypropyl cellulose, hydroxypropyl methylcellulose, methyl cellulose, methylethyl cellulose, modified starch as well as mixtures thereof and/or selected from the group agar, egg yolk, gelatin, roux, kneeded butter, pectin, sago, starch as well as mixtures thereof.

## Revendications

1. Boisson avec jus de betterave rouge et jus de citron, **caractérisée en ce qu'**elle contient au moins 30 % de jus de betterave rouge et au moins 30 % de jus de citron.

2. Boisson selon la revendication 1, **caractérisée en ce qu'**elle contient au moins 40 % de jus de betterave rouge et au moins 40 % de jus de citron.

3. Boisson selon la revendication 1 ou 2, **caractérisée en ce qu'**elle contient au moins 50 % de jus de betterave rouge et au moins 50 % de jus de citron.

4. Boisson selon l'une des revendications 1 à 3, **caractérisée en ce que** les agrumes sont choisis dans le groupe comprenant la lime (*Citrus aurantüfolia*), la bergamote (*Citrus bergamia*), le combawa (*Citrus hystrix*), le citron rêche (*Citrus jambhiri*), la lime de Tahiti (*Citrus latifolia*), ou également la bergamote de Tunisie *(Citrus limetta*), le citron (*Citrus limon*), par exemple le lime doux (*Citrus limonia*), le cédrat (*Citrus medica*), le yuzu (*Citrus junos*) ou également le hyuganatsu (*Citrus tamurana*) ainsi que leurs mélanges.

5. Boisson selon l'une des revendications 1 à 4, **caractérisée en ce que** le jus de betterave rouge et/ou le jus de citron sont fraichement pressés.

6. Boisson selon l'une des revendications 1 à 5, **caractérisée en ce qu'**elle contient de la chair de fruit des betteraves rouges et/ou du jus de citron est présente, la quantité en chair de fruit représentant de préférence jusqu'à environ 10 % de la boisson.

7. Boisson selon l'une des revendications 1 à 6, **caractérisée en ce qu'**au moins un agent sucrant est présent, la quantité d'agent sucrant représentant de préférence jusqu'à 20 %, en particulier jusqu'à 10 % de la boisson.

8. Boisson selon la revendication 7, **caractérisée en ce qu'**elle contient comme agent sucrant, au moins un agent sucrant naturel, de préférence un agent sucrant choisi dans le groupe contenant le miel, le sucre, le sirop d'écorces, en particulier d'érable, de fruits, de céréales, en particulier d'amarante, ainsi que leurs mélanges.

9. Boisson selon l'une des revendications 1 à 8, **caractérisée en ce qu'**elle contient de l'acide carbonique.

10. Boisson selon la revendication 9, **caractérisée en ce que** la quantité d'acide carbonique représente jusqu'à 5 %, de préférence de 0,1 % à 3 %.

11. Boisson selon l'une des revendications 1 à 10, **caractérisée en ce qu'**elle contient au moins un arôme choisi dans le groupe comprenant les aromes naturels, les arômes identiques aux arômes naturels et leurs mélanges.

12. Boisson selon la revendication 11, **caractérisée en ce que** la quantité d'arôme ne dépasse pas 5% de la boisson.

13. Boisson selon l'une des revendications 1 à 12, **caractérisée en ce qu'**elle contient au moins un agent de conservation, choisi dans le groupe comprenant l'acide sorbique, le sorbate de sodium, le sorbate de potassium, le sorbate de calcium, l'acide benzoïque, le benzoate de sodium, le benzoate de potassium, le benzoate de calcium, l'ester PHB, le sel de sodium de l'ester éthylique PHB, l'ester propylique PHB, le sel de sodium de l'ester propylique PHB, l'ester méthylique PHB, le sel de sodium de l'ester méthylique PHB, le dioxyde de soufre, le sulfite de sodium, le bisulfite de sodium, le disulfite de sodium, le sulfite de potassium, le sulfite de calcium, l'hydrogénosulfite de calcium, le biphényle, l'orthophénylphénol, l'orthophénylphénol sodique, le thiabendazole, la nisine, la natamycine, l'hexaméthylènetétramine, le dicarbonate de diméthyle, le nitrite de potassium, le nitrite de sodium, le nitrate de sodium, le nitrate de potassium, l'acide acétique, l'acétate de potassium, l'acétate de sodium, l'hydrogénoacétate de sodium, l'acétate de calcium, l'acide lactique, l'acide propionique, le propionate de sodium, le propionate de calcium, le propionate de potassium, l'acide borique, le borax ainsi que leurs mélanges.

14. Boisson selon l'une des revendications 1 à 13, **caractérisée en ce qu'**elle contient au moins un agent régulant le pH.

15. Boisson selon l'une des revendications 1 à 14, **caractérisée en ce qu'**elle contient au moins un épaississant choisi dans le groupe constitué de l'acide alginique, l'agar-agar, le carragheen, la farine de graines de caroube, la farine de guar, la gomme adragante, la gomme arabique, la gomme de xanthane, la gomme karaya, le tara, le gellane, la pectine, la cellulose, un éther de cellulose, en particulier la carboxyméthylcellulose, l'hydroxypropylcellulose, l'hydroxypropylméthylcellulose, la méthylcellulose, la méthyléthylcellulose, des amidons modifiés ainsi que leurs mélanges, et/ou choisi parmi le groupe de l'agar-agar, le jaune d'oeuf, la gélatine, le roux, le beurre, la pectine, le sagou, des amidons ainsi que leurs mélanges.
